**Europäisches Patentamt**

**European Patent Office**

**Office européen des brevets**

(19)

(11) **EP 1 294 205 A1**

(12) ## EUROPEAN PATENT APPLICATION

(43) Date of publication:
**19.03.2003 Bulletin 2003/12**

(51) Int Cl.⁷: $H04Q\ 7/30$

(21) Application number: **01440301.8**

(22) Date of filing: **13.09.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **ALCATEL**
**75008 Paris (FR)**

(72) Inventors:
• **Kermade, Frédéric**
**22700 Saint-Quay Perros (FR)**

• **Maurer, Michael**
**71336 Waiblingen (DE)**

(74) Representative: **Urlichs, Stefan, Dipl.-Phys. et al**
**Alcatel**
**Intellectual Property Department,**
**Postfach 300929**
**70449 Stuttgart (DE)**

(54) **Digital signal processor multi-channel time alignment device and method**

(57) For processing a data flow received on a plurality of different channels, there is provided:

- at least one digital signal processor (2) arranged to have its processing power divided into processing time slices, each dedicated to independently performing determined processing tasks on said data flow of an allocated channel, and
- allocation means (10) for allocating dynamically the processing time slices to respective data channels so as to satisfy time alignment requirements of said channels.

The digital signal processor (2) typically processes voice data, e.g. in UMTS communications or the like, for instance to process voice data at the Iu-cs interface of a UTRAN network.

The allocation means (10) can allocate data of a given data channel to a processing time slice in phase advance or in phase delay.

An egress buffer (18) can be provided for adding a delay in a given channel to adjust the phase accurately or to compensate for a processing of the corresponding data of said given channel at an advanced processing time slice when the most time appropriate slice is not free.

Fig. 15

**EP 1 294 205 A1**

EP 1 294 205 A1

○ Free DSP encoding slices      ⊘ Initial slices    ▱ Initial delay
● Used DSP encoding slices      ◍ Target slices    ▱ Target delay

Phase Delay

0ms           20ms

DSP reference

Channel output           Channel output

Packet
P1

Packet
P2

Phase delay

Fig. 18

**Description**

The invention relates to the field of digital signal processing in which a digital signal processor (DSP) is called to handle more than one channel, taking in account a time alignment of the different channels. Time alignment is a function that allows a change in the transmission phase, advance or delay associated with a voice channel.

There then arises the problem of fairly sharing DSP processing power between channels and of determining the type of processing to ensure proper implementation and independence of channels.

The voice channels can typically come from a UTRAN mobile telephony system, in which a time alignment function is then required at the Iu-cs interface between RNC and CN layers. This particular aspect of the time alignment function at the Iu-cs interface is presented in the following publications laying out the specification of the third generation telephony:

-    3G TS 25.402: "Synchronisation in UTRAN stage 2";
-    3GTS 25.435: "UTRAN $I_{ub}$ Interface User Plane Protocols for COMMON TRANSPORT CHANNEL Data Streams"; and
-    3G TS 25.427: "$I_{ub}/I_{ur}$ Interface User Plane Protocol for DCH Data Streams".

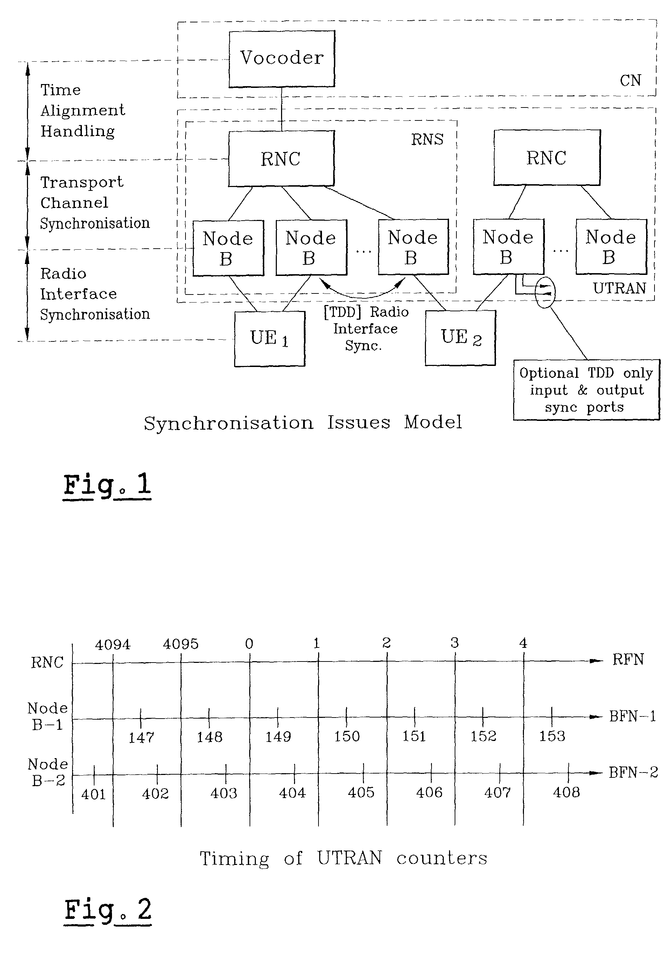

The salient features of these specifications are reproduced below with reference to figures 1 to 9.

Figure 1 shows the nodes involved by synchronisation issues. Node Synchronisation relates to the estimation and compensation of timing differences among UTRAN nodes.

FDD (Frequency Division Duplex) and TDD (Time Division Duplex) modes have different requirements on the accuracy of the timing difference estimation and on the necessity to compensate for these differences.

By Node Synchronisation is generally meant the achievement of a common timing reference among different nodes. In UTRAN, although a common timing reference among all the nodes could be useful, it is not required. In fact, the counters for the different nodes (RFN and BFN), even if frequency-locked to the same network synchronisation reference, may fail to be phased aligned, as illustrated in figure 2 below.

However in order to minimise the transmission delay and the buffering time for the DL transmission on the air interface, it can be useful to estimate the timing differences between RNC and Node Bs, without the need to compensate for the phase differences between RNC's and Node B's counters.

On the other hand, the achievement of a common timing reference among Node B's is needed in TDD to allow Radio Frame Synchronisation, i.e. the phase differences among Node B's clocks need to be compensated.

For these reasons, node synchronisation in UTRAN refers to the following two aspects. Their usage differs and the requirements differ between the FDD and TDD modes:

**- RNC-Node B Node Synchronisation:**

If a good Network synchronisation reference is used, the drift between nodes will be low, but could occur. If a Network synchronisation reference is not available or is poor, the local node reference oscillator must be relied upon. In such case, the RNC-Node B Node Synchronisation procedure can be used as a background process to determine the frequency drift between nodes. Therefore, a system can be deployed without network synchronisation references (to e.g. the Node B's).

The following points can be made concerning RNC-Node B Node Synchronisation:

1. It allows to obtain knowledge of the timing differences between RNC and its Node Bs.
2. The use is mainly for determining good DL and UL offset values for transport channel synchronisation between RNC and their Node B's.
3. Knowledge of timing relationships between these nodes is based on a measurement procedure called RNC-Node B Node Synchronisation Procedure. The procedure is defined in the user plane protocols for Iub (DCH, DSCH, and FACH/PCH) and Iur (DCH).

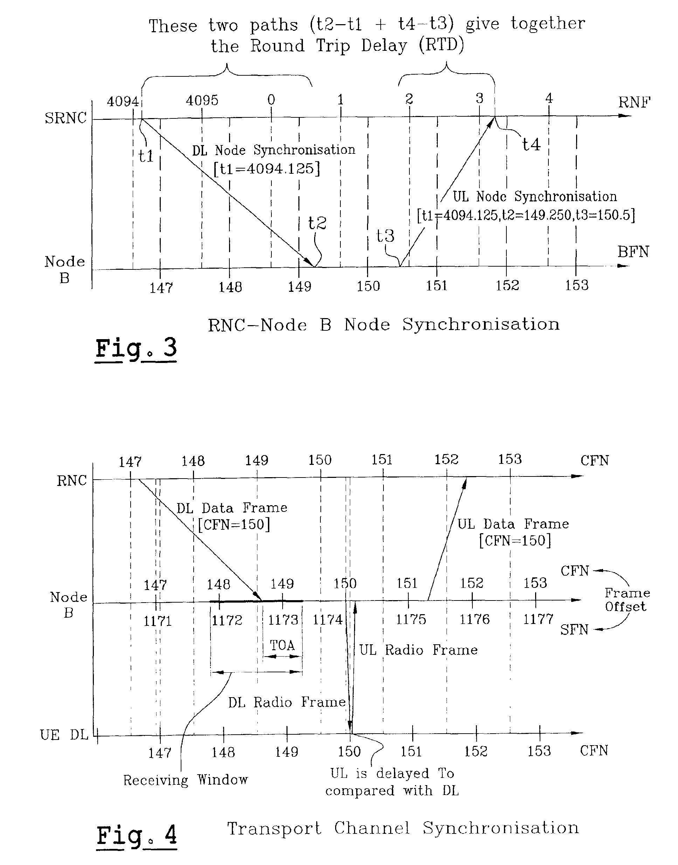

When the procedure is used from SRNC over the DCH user plane, it allows to find out the actual round-trip-delay a certain service has, as illustrated by figure 3.

**- Inter Node B Node Synchronisation:**

This is necessary in the TDD mode to compensate the timing differences among Node Bs in order to achieve a common timing reference. The purpose of having a common timing reference is to allow Radio Frame Synchronisation, which is used within neighbouring cells to minimise cross-interference.

**Transport Channel Synchronisation**

The Transport Channel Synchronisation mechanism defines synchronisation of the frame transport between RNC and Node B, considering radio interface timing.

DL TBS transmission is adjusted to fit receiver by adjusting the DL TBS timing in upper node. UL TBS transmission is adjusted by moving the UL reception window timing internally in upper node.

The Transport Channel (or L2) synchronisation provides a L2 common frame numbering between UTRAN and UE (frame synchronisation between the L2 entities). This frame number is the Connection Frame Number (CFN), and it is associated at L2 to every TBS and passed to L1 : the same CFN is received on the peer side associated with the same TBS.

The CFN is not transmitted in the air interface for each TBS, but is mapped by L1 to the SFN of the first radio frame used for the transmission of the TBS (the SFN is broadcast at L1 in the BCH). The mapping is performed via the Frame Offset parameters.

This aspect is illustrated in figure 4.

The transport channel synchronisation mechanism is valid for all downlink transport channels.

**Timing Adjustment.**

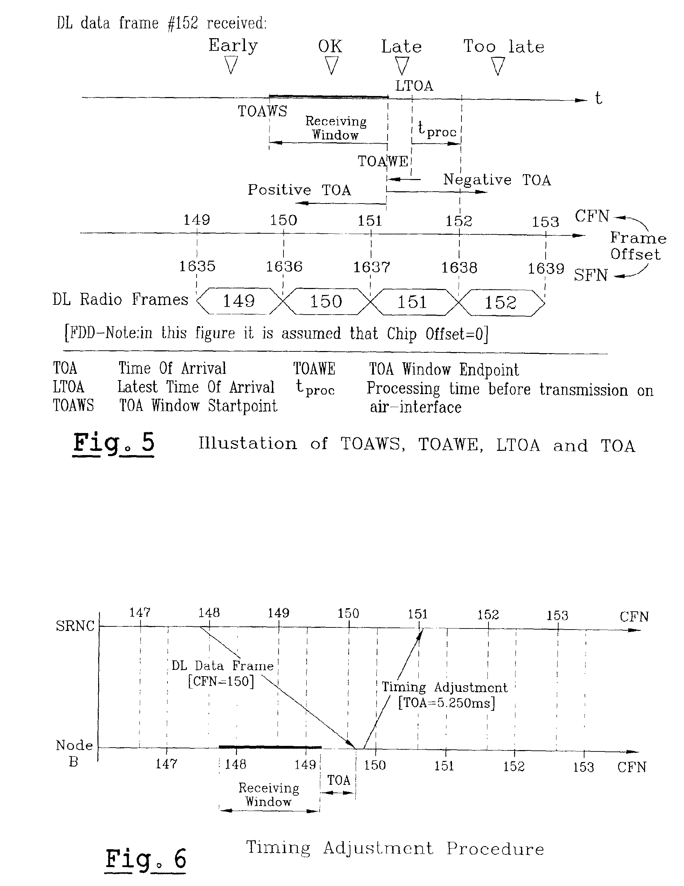

A receiving window is configured in Node B at Transport bearer Setup and Reconfiguration for DL frames (TOAWS and TOAWE), as shown in figure 5. The purpose is to make it possible to supervise whether data frames are received in the window or not.

When a frame is received outside that window, a response is sent to RNC by means of a Timing Adjustment Control frame containing the Time of Arrival information (TOA). This allows the L1 to indicate to L2 (through the L1-MAC primitive carried by the Timing Adjustment Control frame) the necessity to adjust the timing of the DL transmission, in order to control and minimise the transmission delay and the buffering time for the transmission on the air interface (i.e. to ensure that the TBS does not arrive too much in advance respect to the transmission time).

The window could be defined to have a margin before LTOA (TOAWE >0). This is to indicate to RNC that data frames are a bit late but they are still processed by Node B. In this case, data frames are received after TOAWE but before LTOA.

Using this window definition and supervising method, it is possible to determine the correct timing for sending data frames from the RNC over Iur/ Iub, as illustrated in figure 6.

The window size and position is chosen with respect to expected data frame delay variation and different macro-diversity leg delays.

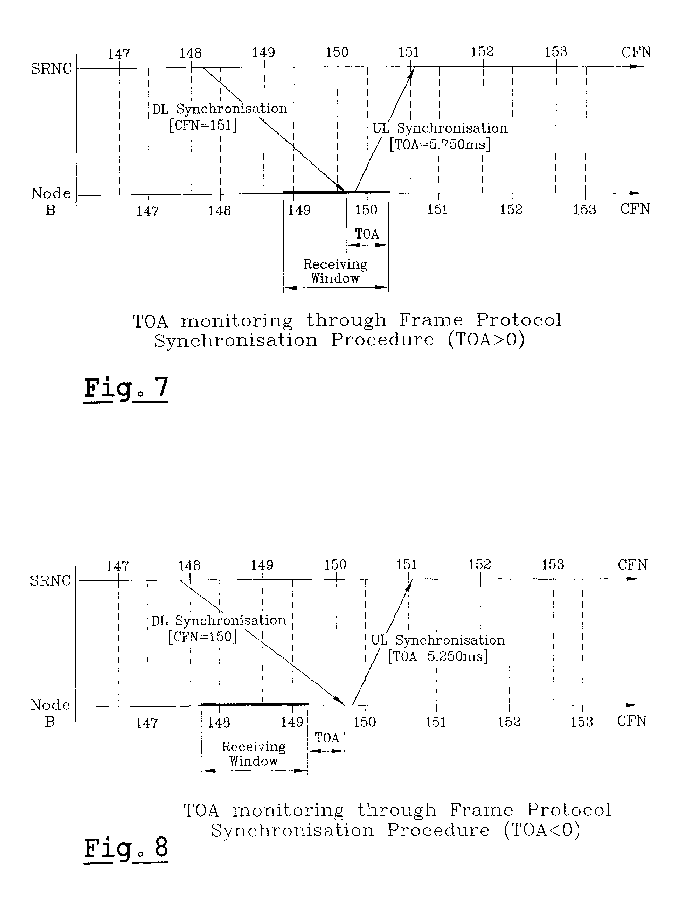

In order to monitor the TOA when no DL data frames are sent, a synchronisation procedure is defined in the Iub/Iur frame protocols. This procedure makes use of UL and DL Sync Control frames. The SRNC sends DL Sync Control frame containing the CFN in which the control frame should be received by the Node B. When the Node B receives the DL Sync Control frame, it always replies with an UL Sync. Control frame containing the TOA, even if the DL Sync Control frame is received within the receiving window. The principle of such a TOA monitoring for TOA>0 and TOA<0 is illustrated by figures 7 and 8 respectively.

**Time Alignment Handling**

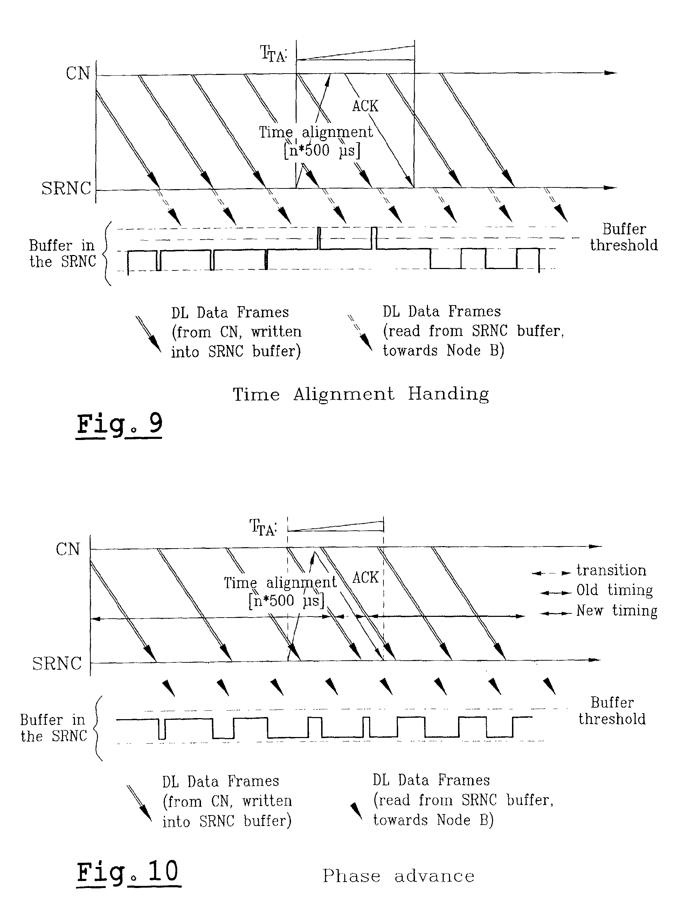

The purpose of the time alignment procedure over Iu is to minimise the buffering delay in SRNC by controlling the DL transmission timing in the CN node. The time alignment procedure is controlled by SRNC and is invoked whenever the SRNC detects the reception of Iu User Plane PDU at an inappropriate timing that leads to an unnecessary buffering delay. The SRNC indicates to the CN node by means of a Time Alignment control frame. The necessary amount of delay or advance adjustment is indicated by expressing a number of (+/-) 500 $\mu$s steps, as illustrated by figure 9.

**Radio Interface Synchronisation**

The Radio Interface Synchronisation relates to the timing of the radio frame transmission (either in downlink [FDD] or in both directions [TDD]). FDD and TDD have different mechanisms to determine the exact timing of the radio frame transmission and also different requirements on the accuracy of this timing.

For the combining process in the UE (MS) to work well, the data sent on the radio by the different node Bs need to be the same and arrive in the UE at the same time (tolerance a few micro-seconds).

In FDD, Radio Interface Synchronisation is necessary to assure that the UE receives radio frames synchronously from different cells, in order to minimise UE buffers.

In TDD Radio Interface Synchronisation is necessary for various reasons:

- Radio Frame Synchronisation is used to synchronise radio frames within neighbouring cells in order to minimise cells cross-interference;
- Multi frame Synchronisation is used to allow frame wise hopping mechanisms among cells (e.g. Cell Parameter Cycling according to TS25.223) and to make procedures involving more Nodes B (e.g. handover) easier and more efficient;
- Timing advance is used between UE and UTRAN in order to minimise UE-cell interference.

Having regard to the foregoing, the Applicant proposes a new approach to the problem of DSP multi-channel time alignment, which judiciously exploits the fact that DSP processing budget is larger than what is required to process channels on a DSP.

More particularly, the invention proposes, according to a first aspect, a digital signal processing device for processing a data flow received on a plurality of different channels, characterised in that it comprises:

- at least one digital signal processor arranged to have its processing power divided into processing time slices, each dedicated to independently performing determined processing tasks on the data flow of an allocated channel, and

- allocation means for allocating dynamically the processing time slices to respective data channels so as to satisfy time alignment requirements of the channels.

The invention is particularly advantageous in applications where the digital signal processor is called to process voice data, e.g. in UMTS communications or the like, for instance to process voice data at the lu-cs interface of a UTRAN network.

The allocation means can be operative to allocate data of a given data channel to a processing time slice in phase advance or in phase delay.

Advantageously, the device further comprises egress buffer means for adding a delay in a given channel to adjust the phase accurately or to compensate for a processing of the corresponding data of the given channel at an advanced processing time slice when the most time appropriate slice is not free.

In the embodiment, the time slices have a time length of 10 milliseconds or less, and preferably a time length in the region of 1 millisecond or less. However, different values can be used to suit requirements.

Preferably, the processing time slices are arranged in a sequence that repeats periodically with a determined periodicity.

The number N of slices per periodic sequence can be e.g. of the order of 10 to 30.

The processing time slices are preferably of equal length and perform identical processing operations.

Each processing time slice can be divided into sub-slices, a processing time slice comprising e.g. at least a sub-slice for encoding data, and a sub-slice for decoding data.

It will be appreciated that time alignment generally only affects data flow such as voice in the direction CN toward RNC which is associated with "encoding". A flow in the opposite direction is associated with "decoding" and is not subject to a time alignment mechanism. However, by having sub-slices dedicated to decoding, the same DSP can process flows in both directions i.e. from the CN toward to the RNC and from the RNC to the CN.

The allocation means may comprise:

- phase change analysis means for determining a phase change of a given channel data that can be a phase advance or a phase delay and for identifying a target phase of the digital signal processor,
- target slice analysis means for determining the most appropriate processing time slice for which the associated delay is smaller than the slice time length, and
- target slice and delay selection means for selecting a target processing time slice having regard to the state of candidate processing time slices located within a predetermined time distance of the target phase.

Preferably, the phase change analysis means is operative to identify a target phase ($\Phi^{target}$) relative to an initial phase ($\Phi^{init}$) according to the following formula:

$$(\Phi^{target}) = (\Phi^{init} + \Delta) \text{ modulo } P,$$

where P is the periodicity of the repetition of a sequence of processing time slices and $\Delta$ is the phase change.

The target slice analysis means may comprise means for finding a slice for which the associated delay is smaller than the slice period of said DSP, so as to minimise egress buffer delay.

In the preferred embodiment, the target slice and delay selection means comprises:

- means for analysing the state of candidate slices lying within a determined maximum distance in time before a target phase ($\Phi^{target}$), and
- means for determining an egress buffer delay.

The target slice and delay selection means may comprise :

- means operative when a target slice is free to effect a change of slice and adjust a delay, and to send an acknowledgement to a requestor,
- means operative when a target slice equals an initial slice to adjust a delay without changing slice, and to send an acknowledgement to a requestor,
- means operative if another candidate slice is free to effect a change of slice and adjust a delay, and to send an acknowledgement to a requestor.

According to a second aspect, the invention proposes a signal processing method for processing a data flow received on a plurality of different channels: characterised in that it comprises the steps of:

- dividing the processing power of at least one digital signal processor into processing time slices, each dedicated to independently performing determined processing tasks on the data flow of an allocated channel, and
- allocating dynamically the processing time slices to respective data channels so as to satisfy time alignment requirements of the channels.

The optional features presented above in the context of the device can be implemented mutatis mutandis in the context of this method.

According to a third aspect, the invention relates to the use the above method or device for the processing of AMR data.

According to a fourth aspect, the invention relates to the use of the above method or device for the processing of transparent (T) data.

According to a fifth aspect, the invention relates to the use of the above method or device for the processing of non-transparent (NT) data.

In the preferred embodiments, a combination of a static breakdown of DSP processing power into slices with dynamic voice channel assignment function allows the time alignment functions to be supported in a multi-channel DSP architecture.

Studies by the Applicant involving simulations have indicated that for a typical application with AMR speech channels about 50% of DSP processing power is needed. This means that if the processing power can be fairly distributed in time between encoding, decoding, and other various tasks referred to as "overhead", there is a possibility of processing a channel at different points in time.

The invention provides a cost-effective solution by using DSP technology in which a single DSP can process multiple channels. Therefore, the channel density (number of channels) can increase as DSP technology develops, leading to reduced costs per channel.

It moreover offers an appropriate implementation that allows end-to-end speech quality to be optimised as defined by standardisation.

The invention and its advantages shall become more apparent from reading the following description of the preferred embodiments, given purely as non-limiting examples with reference to the appended drawings in which:

- figure 1 is a block diagram illustrating a synchronisation issues model for a UTRAN system;
- figure 2 is a timing chart at different nodes showing the timing of UTRAN counters;
- figure 3 is a timing chart showing an RNC-Node B Node synchronisation;
- figure 4 is a timing chart for transport channel synchronisation in a UTRAN system;
- figure 5 show illustrations of TOAWS, TOAWE, LTOA and TOA times in a UTRAN system;
- figure 6 is a timing chart illustrating a timing adjustment procedure;
- figure 7 is a timing chart showing the time of arrival (TOA) monitoring through frame protocol synchronisation procedure, in the case of TOA > 0;
- figure 8 is a timing chart showing the time of arrival (TOA) monitoring through frame protocol synchronisation procedure, in the case of TOA < 0;
- figure 9 is a timing chart showing time alignment handling considerations in a UTRAN system;
- figure 10 is a timing chart showing a case of phase advance in an analysis of phase adjustment for AMR speech traffic;
- figure 11 is a representation of the situation shown in figure 10 seen from a theoretical point of view;
- figure 12 is an alternative representation of the situation shown in figure 10 seen from a theoretical point of view;
- figure 13 is a timing chart showing a case of phase delay in an analysis of phase adjustment for AMR speech traffic;
- figure 14 is a representation of the situation shown in figure 13 seen from a theoretical point of view;
- figure 15 is simplified block diagram of a single DSP device handling multiple voice channels in accordance with an embodiment of the invention;
- figure 16 is a timing chart showing how DSP processing power is divided into processing time slices, each divided into sub-slices, in accordance with an embodiment of the invention;
- figure 17 is a timing chart illustrating the principles of phase advance and phase delay in the context of the embodiment;
- figure 18 is an example of time slice management according to the embodiment of the invention for a case of phase delay;
- figure 19 is an example of time slice management according to the embodiment of the invention for a case of phase advance; and
- figure 20 is a flow chart showing some steps performed in a processing time slice management algorithm in accordance with the embodiment of the invention.

Before describing the preferred embodiments of the invention in detail, there shall be first be explained the Applicant's analysis and study of the time alignment problem in the context of an lu-cs interface between RNC and CN, and its implications for the handling of multiple voice channels by a single digital signal processor (DSP).

**Analysis of Time Alignment / Implementation**

**Global Understanding**

Time alignment at lu-cs interface between RNC and CN is initiated by RNC as a result two possible phenomena:

- phase adjustment in UTRAN network, or
- network synchronization drift at lu-cs interface.

Time alignment can be initiated by RNC as follows:

A)As a result of a Timing adjustment procedure initiated by NodeB; in which case two possible cases can arise:

1/ phase between NodeB and RNC is to be advanced more than the buffering delay in RNC (underrun situation):

- phase is to be advanced in MSC,

2/ phase between NodeB and RNC is to be delayed such that RNC buffer threshold is crossed:

- phase is to be delayed in MSC.

B) As a result of network synchronisation drift between MSC and RNC leading to:

1/ underrun situation at RNC level:

- phase is to be delayed in MSC,

2/ RNC buffer threshold is crossed:

- phase is to be advanced in MSC.

Two main requirements are to be met for a proper implementation of a Time Alignment function:

1) satisfy buffer management constraints in RNC, and
2) minimise overall end-to-end delay.

## Analysis of phase adjustment for AMR speech traffic

This section looks at what it means to adjust a transmission phase in terms of discard and duplication of samples and/or packets.

## Phase advance:

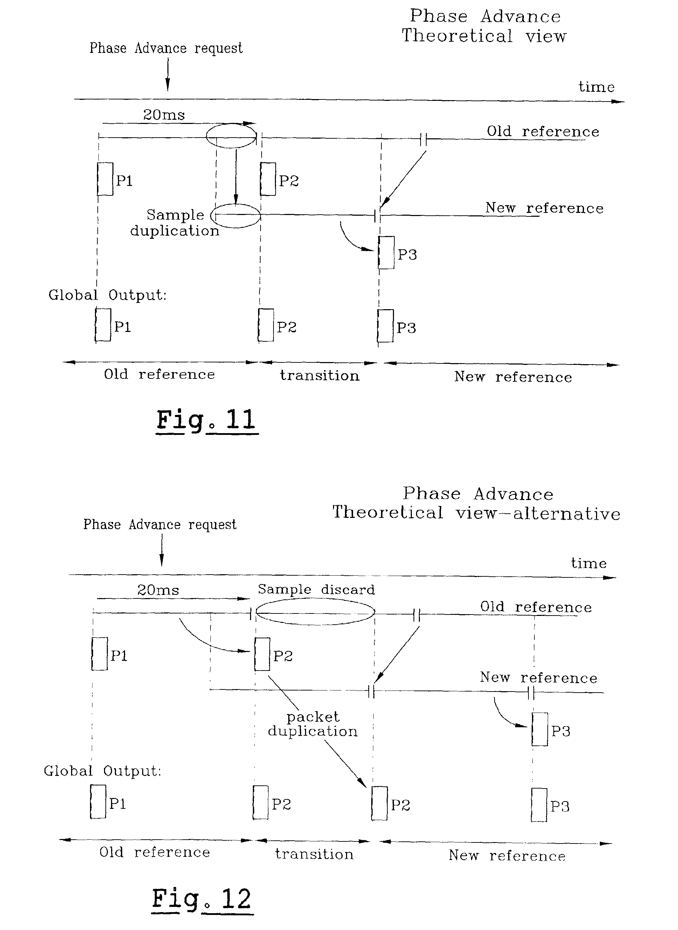

A phase advance means an early sending of packets on the associated channel. It can be said that the sampling window is to be shifted so as to generate packets earlier. This concept is illustrated by figure 10.
From a theoretical standpoint, the implementation can be regarded to take on the form illustrated in figure 11. This view calls for the following comments:

- There is sample replication as packet P3 is sent with a smaller TTI during the transition window. It is therefore possible that almost an entire packet is replicated if large phase advance is requested (about 20ms). A strict 20ms phase advance does not mean anything as it results in no difference (the mechanism is modulo 20ms).
- The implication is that for voice traffic, speech can experience 20ms perturbation, which is most likely acceptable.
- The overall delay is reduced since the sampling window is really advanced.
- There is a transient packet delay variation associated with the transition.

A possible alternative implementation is illustrated by figure 12.
This alternative involves delaying the next packet during the transition window with the constraint of duplicating the whole previous packet to ensure that there is no underrun condition at RNC level.

## Phase delay:

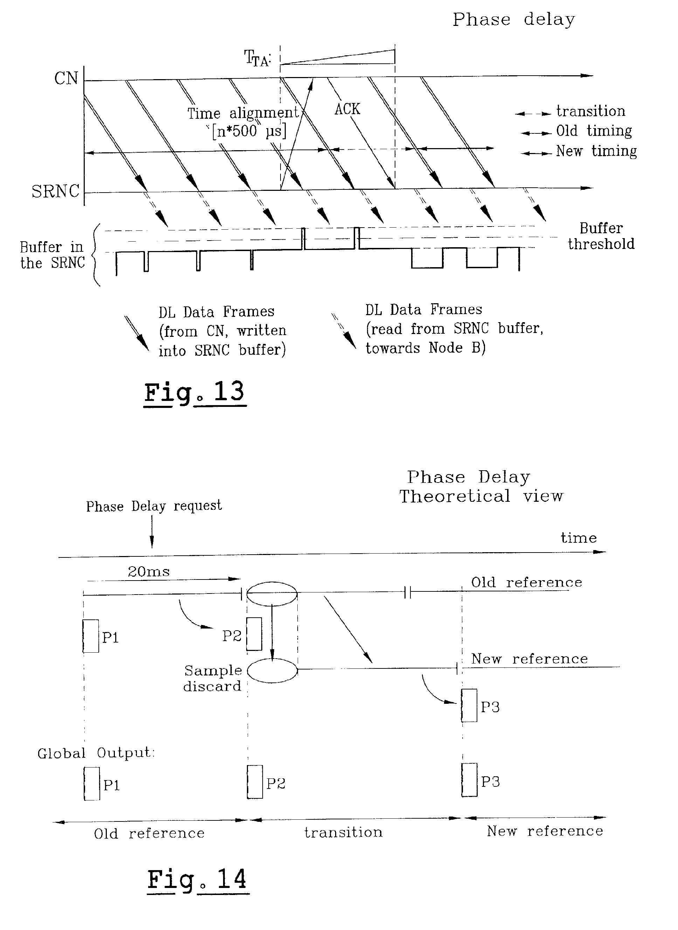

A phase delay means a later sending of packets on the associated channel. It can be said that the sampling window is to be shifted so as to generate packets later, as illustrated in figure 13.
On a theoretical standpoint, the implementation can be regarded to take on the form illustrated by figure 14.
This implementation calls for the following comments:

- There is sample discard as between packet P2 and P3 there are samples that are ignored. It is therefore possible that an entire packet is discarded if phase delay of the whole TTI is requested (20ms).
- This means that for voice traffic, speech can experience 20ms perturbation, which is most likely acceptable.
- The overall delay is not impacted since there is no added buffering.
- There is a transient packet delay variation associated with the transition.

## Practical embodiments of the invention

The embodiment is implemented in the context of a time alignment requirement for a UMTS/UTRAN communications system, and more particularly to voice channels at the Iu-cs interface, as generally presented above with reference to figures 1 to 14. The specifics of such a system covered supra shall not be repeated for conciseness.
The embodiment was designed with the following points in mind:

- for speech quality purposes, when considering information duplication, sample duplication is preferred to full packet duplication, and
- time Alignment applied on one channel must not interfere with other channels.

The following description is based on an example of 13 channels allocated per DSP, it being clear that the number of channels per DSP can differ depending on the DSP used, channel parameters, and the specifics of the application.

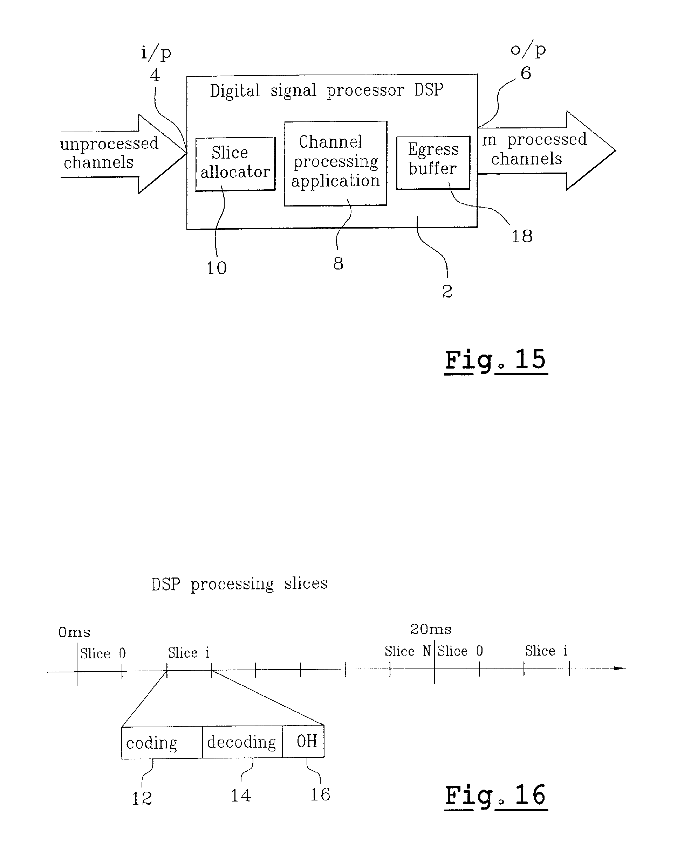

Figure 15 illustrates the basic configuration of the embodiment, comprising a single digital signal processor (DSP) 2 receiving m (=13) unprocessed channels at a channel input section 4 and delivering the m channels after processing at a channel output section 6. The processing of the channels is provided by a channel processing application 8 of the DSP 2. The channel processing application 8 is thus an integral part of the DSP 2 itself.

Static definition of slices

As shown by figure 16, the DSP operates on the incoming channels to be processed in terms of time slices (hereafter referred to as "slices"), each occupying a certain period of time. The management of slice allocation to incoming data channels is handled by a slice allocation unit 10 which forms an integral part of the DSP 2 (figure 15). The processing power of the DSP 2 is thereby broken down into these slices. In the example, a periodic 20 ms DSP processing power is divided up into N processing slices of equal size. Each slice includes processing power for encoding and decoding sub-slices (identified by reference numerals 12 and 14 respectively). These sub-slices are independent in that there is no relationship between the channel associated with encoding and the channel associated with decoding. Some processing margin is taken into account for overhead 16.

Slice dimensioning

In the example, there are two possible alternatives that depend on overall SW-DSP performance:

(i) a 20 ms period made of 20 slices of 1ms for encoding and for decoding, or
(ii) a 20 ms period made of N slices of 20/Nms for encoding and for decoding.

Naturally, the slice dimensioning is arbitrary and can be expected to vary considerably according to the application, type of data processed, the data rate and processing power of the DSP. For instance, if a DSP of modest power only is implemented, it can reasonably be expected to use slices of 2ms or 5ms, possibly more.
Also, it can be envisaged to implement the embodiment for transparent (T) and non-transparent (NT) data applications, as well as AMR data. The time between successive frames will vary on the application (AMR, NT or T data). Additionally for NT and T data, the data rate will also influence the time between successive frames. In the present state of technology, this time can typically vary between 10ms and 40ms.

Dynamic channel assignment to slices

Time Alignment consists in dynamically assigning channels to the most appropriate slice by shifting sampling accordingly. Because the slicing mechanism is not perfectly adjusted with the time alignment granularity, the DSP 2 of the embodiment incorporates an egress buffer 18 (figure 15) to compensate accordingly. Also, because the most appropriate slice may not be free, another slice can be selected instead if it fulfils specific conditions, at the cost of using additional egress delay.

Egress buffering

In the example, there is provided egress buffering capacity for each channel. This buffering serves two purposes:

i) it allows phase adjustment when slice dimension does not match the time adjustment granularity (500 µs), and
ii) it allows the selection of a previous slice, for mechanism flexibility, when the most appropriate slice is not free, by adding a delay for compensation.

It will be noted that shift granularity depends on slice dimensioning (lms or 0.76ms).
An egress buffer 18 of Kms (milliseconds) is defined with a maximum value Kmax for speech quality reasons (e.g. Kmax=4ms), whereby an egress buffer 18 can be defined for N (=32) periods of 125µs.

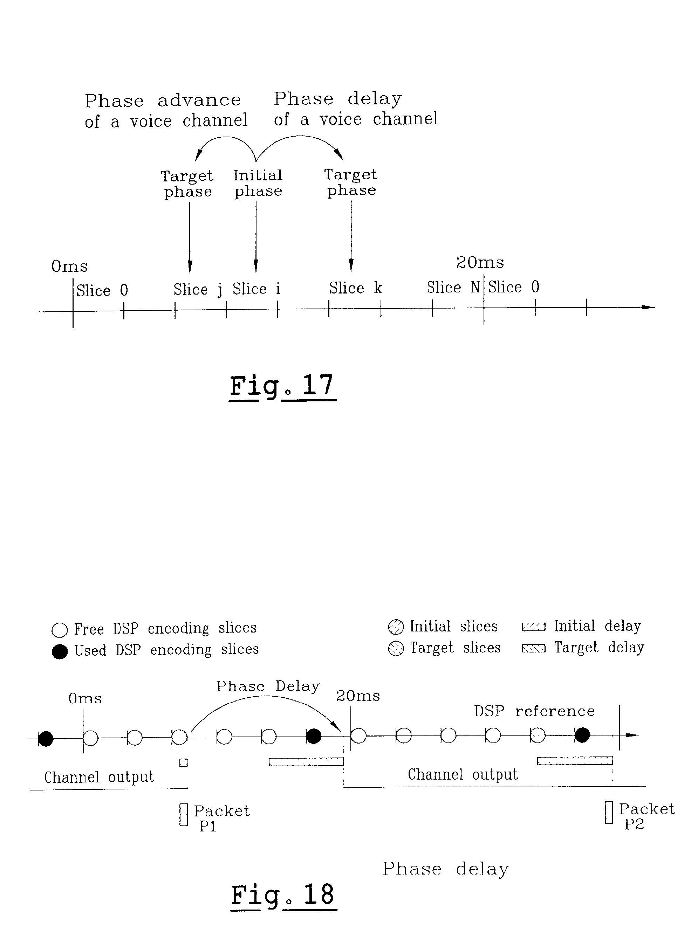

Figure 17 illustrates the notion of transitions from an initial phase to a target phase (involving a different slice) in the case of both a phase advance of a voice channel and a phase delay of a voice channel.

Phase analysis

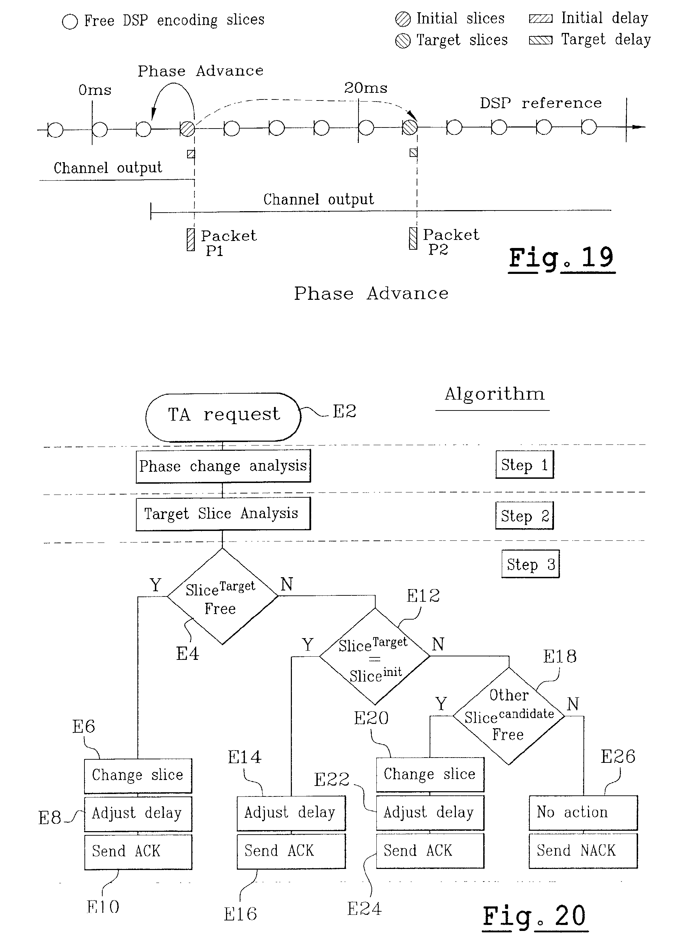

There shall now be described a case of slice analysis performed by the DSP 2, with reference to the DSP processing slices of which figures 18 and 19 illustrate possible examples, respectively for a case of phase delay and a case of phase advance. In the figures, the slices are symbolised by circles. White circles designate free DSP encoding slices, a full black circle designates an initial slice, chequered circles designate used DSP slices and a grey circle designates a target slice. Likewise, a full black rectangle designates an initial delay and a grey rectangle designates a target delay.
The following notation is used :

- $\Phi^{init}$ = initial phase,
- $slice^{init}$ = initial slice,
- $delay^{init}$ = initial egress buffer delay,
- $\Phi^{target}$ = target phase,
- $slice^{target}$ = target phase,
- $delay^{target}$ = target egress buffer delay,
- $\Delta$ = phase change.

The following relations can be established:

$$\Phi^{init} = slice^{init} + delay^{init}$$

$$\Phi^{target} = slice^{target} + delay^{target}.$$

The process used in the embodiment for managing slices at the level of the DSP 2 is explained below with reference to the flow chart of figure 20.

The process is initiated upon receipt of a TA request (step E2).

In response, there is performed a first step comprising a phase change analysis (step 1). This involves analysing the phase change, which can be a phase advance or a phase delay and identifying the target phase in the DSP reference, using the relation :

$$\Phi^{target} = (\Phi^{init} + \Delta) \bmod 20ms.$$

Next is performed a second step comprising a target slice analysis (step 2). This consists in finding the most appropriate slice for which the associated delay is smaller than the DSP slice period, in order to minimise the egress buffer delay.

There is then performed a target slice and delay determination algorithm (step 3) which consists in selecting the target slice by analysing the state (free, used by the same channel, used by another channel) of all candidate slices. A candidate slice is defined as a slice located at a maximum at a distance of Kms before the target phase. Egress buffer delay is also taken into account.

The corresponding algorithm starts by determining whether a slice is free (step E4).

If there is a free slice then there is performed a change of phase involving a change of slice (step E6) and a delay adjustment (step E8). An acknowledge (ACK) to the requestor is also sent (step E10).

If there is no free slice, it is determined whether the target slice slice$^{target}$ equals the initial slice slice$^{mit}$ (step E12). If such is the case, there is performed a delay change or adjustment (step E14) and an acknowledge (ACK) is sent to the requestor (step E16).

If the target slice slice$^{target}$ is not the initial slice slice$^{init}$, then it is determined whether another candidate slice is free (step E18). If such is the case, then there is performed a change of phase involving a change of slice (step E20) and a delay adjustment (step E22). An acknowledge (ACK) to the requestor is also sent (step E22).

If there is no other candidate slice free, then no action is taken. Specifically, there is performed no phase change (step E26) and a Not-Acknowledge signal is sent to the requestor.

It is clear that there are many possible variants to the above-described embodiments within the scope of the present invention, in terms of set-up, parameterisation, channel management, etc.

Moreover, the scope of the invention extends beyond the sphere of UTRAN communications systems, its concept being applicable to all types of multichannel processing systems for conveying voice or other forms of data.

**Claims**

1. Digital signal processor device (2) for processing a data flow received on a plurality of different channels, **characterised in that** it comprises:

   - channel processing means (8) arranged to have its processing power divided into processing time slices, each dedicated to independently performing determined processing tasks on said data flow of an allocated channel, and
   - allocation means (10) for allocating dynamically said processing time slices to respective data channels so as to satisfy time alignment requirements of said channels.

2. The device according to claim 1, wherein said channel processing means (8) are operative to process voice data, e.g. in UMTS/UTRAN communications or the like.

3. The device according to claim 2, wherein said channel processing means (8) is operative to process voice data at the Iu-cs interface of a UTRAN network.

4. The device according to any one of claims 1 to 3, wherein allocation means (10) is operative to allocate data of a given data channel to a processing time slice in phase advance or in phase delay.

5. The device according to any one of claims 1 to 4, further comprising egress buffer means (18) for adding a delay in a given channel to adjust the phase accurately or to compensate for a processing of the corresponding data of said given channel at an advanced processing time slice when the most time appropriate slice is not free.

6. The device according to any one of claim 1 to 5, wherein said time slices have a time length of 10 milliseconds or less.

7. The device according to claim 6, wherein said time slices have a time length in the region of 1 millisecond or less.

8. The device according to any one of claims 1 to 7, wherein said processing time slices are arranged in a sequence that repeats periodically with a determined periodicity.

9. The device according to claim 8, wherein the number N of slices per periodic sequence is of the order of 10 to 30.

10. The device according to any one of claims 1 to 9, wherein said processing time slices are of equal length and perform identical processing operations.

11. The device according to any one of claims 1 to 10, wherein each processing time slice is divided into sub-slices (12, 14, 16), a said processing time slice comprising at least a sub-slice (12) for encoding data, and a sub-slice (14) for decoding data.

12. The device according to any one of claims 1 to 11, wherein said allocation means (10) comprise:

- phase change analysis means for determining a phase change of a given channel data that can be a phase advance or a phase delay and for identifying a target phase of the channel processing means (8),
- target slice analysis means for determining the most appropriate processing time slice for which the associated delay is smaller than the slice time length, and
- target slice and delay selection means for selecting a target processing time slice having regard to the state of candidate processing time slices located within a predetermined time distance of the target phase.

13. The device according to claim 12, wherein said phase change analysis means is operative to identify a target phase ($\Phi^{target}$) relative to an initial phase ($\Phi^{init}$) according to the following formula:

$$(\Phi^{target}) = (\Phi^{init} + \Delta) \text{ modulo } P,$$

where P is the periodicity of the repetition of a sequence of processing time slices and $\Delta$ is the phase change.

14. The device according to any one of claims 12 or 13, wherein said target slice analysis means comprises means for finding a slice for which the associated delay is smaller than the slice period of said DSP, so as to minimise egress buffer delay.

15. The device according to any one of claims 12 to 14, wherein said target slice and delay selection means comprises:

- means for analysing the state of candidate slices lying within a determined maximum distance in time before a target phase ($\Phi^{target}$), and
- means for determining an egress buffer delay.

16. The device according to any one of claims 12 to 15, wherein said target slice and delay selection means comprises :

- means operative when a target slice is free to effect a change of slice and adjust a delay, and to send an acknowledgement to a requestor,
- means operative when a target slice equals an initial slice to adjust a delay without changing slice, and to send an acknowledgement to a requestor,
- means operative if another candidate slice is free to effect a change of slice and adjust a delay, and to send an acknowledgement to a requestor.

17. Digital signal processing method for processing a data flow received on a plurality of different channels, **characterised in that** it comprises the steps of:

- dividing the processing power of at least one digital signal processor (2) into processing time slices, each dedicated to independently performing determined processing tasks on said data flow of an allocated channel, and
- allocating (10) dynamically said processing time slices to respective data channels so as to satisfy time alignment requirements of said channels.

18. Use of the method according to any one of claims 17 to 32 for the processing of AMR data.

19. Use of the method according to any one of claims 17 to 32 for the processing of transparent (T) data.

20. Use of the method according to any one of claims 17 to 32 for the processing of non-transparent (NT) data.

Synchronisation Issues Model

## Fig. 1

Timing of UTRAN counters

## Fig. 2

These two paths (t2−t1 + t4−t3) give together
the Round Trip Delay (RTD)

RNC−Node B Node Synchronisation

**Fig. 3**

**Fig. 4**    Transport Channel Synchronisation

DL data frame #152 received:

**Fig. 5**   Illustation of TOAWS, TOAWE, LTOA and TOA

| TOA | Time Of Arrival | TOAWE | TOA Window Endpoint |
| LTOA | Latest Time Of Arrival | $t_{proc}$ | Processing time before transmission on |
| TOAWS | TOA Window Startpoint | | air–interface |

**Fig. 6**   Timing Adjustment Procedure

TOA monitoring through Frame Protocol
Synchronisation Procedure (TOA>0)

**Fig. 7**

TOA monitoring through Frame Protocol
Synchronisation Procedure (TOA<0)

**Fig. 8**

Time Alignment Handing

**Fig. 9**

**Fig. 10**    Phase advance

Phase Advance
Theoretical view

Phase Advance request

time

20ms

Old reference

P1

P2

Sample
duplication

New reference

P3

Global Output:

P1

P2

P3

Old reference     transition     New reference

## Fig. 11

Phase Advance
Theoretical view—alternative

Phase Advance request

time

20ms          Sample discard

Old reference

P1

P2

New reference

packet
duplication

P3

Global Output:

P1

P2

P2

P3

Old reference     transition     New reference

## Fig. 12

Phase delay

**Fig. 13**

Phase Delay
Theoretical view

**Fig. 14**

i/p
4

o/p
6

Digital signal processor DSP

unprocessed
channels

| Slice allocator | Channel processing application | Egress buffer |

m processed
channels

18

10

8

2

**Fig. 15**

DSP processing slices

0ms

20ms

Slice 0    Slice i

Slice N  Slice 0    Slice i

| coding | decoding | OH |

12

14

16

**Fig. 16**

Phase advance          Phase delay
of a voice channel     of a voice channel

Target    Initial         Target
phase     phase           phase

0ms                                                    20ms
|Slice 0      Slice j  Slice i      Slice k      Slice N|Slice 0

## Fig. 17

○ Free DSP encoding slices        ⊘ Initial slices    ▱ Initial delay
● Used DSP encoding slices        ◌ Target slices     ▱ Target delay

0ms              Phase Delay   20ms
                                                       DSP reference

Channel output                              Channel output

☐ Packet                                              ☐ Packet
  P1                                                    P2

Phase delay

## Fig. 18

○ Free DSP encoding slices     ⊘ Initial slices    ▨ Initial delay
                                     ⊗ Target slices    ▧ Target delay

Phase Advance

0ms                      20ms          DSP reference

Channel output

Channel output

Packet P1           Packet P2

# Fig. 19

Phase Advance

## Algorithm

TA request ⟶ E2

Phase change analysis      Step 1

Target Slice Analysis      Step 2

                                         Step 3

Y ◄ $Slice^{Target}$ Free ► N     E12

      E4

Y ◄ $Slice^{Target} = Slice^{init}$ ► N     E18

E6                         E20

Y ◄ Other $Slice^{candidate}$ Free ► N

| Change slice | | | |
| E8 Adjust delay | Adjust delay | Adjust delay | No action |
| Send ACK | Send ACK | Send ACK | Send NACK |

E14     E22     Change slice     E26

E10       E16       E24

# Fig. 20

# EUROPEAN SEARCH REPORT

**European Patent Office**

**Application Number**

EP 01 44 0301

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 15473 A (ERICSSON TELEFON AB L M) 1 March 2001 (2001-03-01) * page 10, line 23 - page 25, line 1 * | 1,17 | H04Q7/30 |
| Y | * figures 5,8,9 * | 2-16, 18-20 | |
| Y,D | "UNIVERSAL MOBILE TELECOMMUNICATIONS SYSTEM (UMTS); SYNCHRONIZATION IN UTRAN STAGE 2 (3GPP TS 25.402 VERSION 4.1.0 RELEASE 4)" ETSI TS 125 402 V4.1.0, June 2001 (2001-06), pages 1-43, XP002189086 * page 14, line 28 - page 15, line 23 * * page 17, line 11 - line 24 * * page 22, line 4 - line 13 * * page 41, line 1 - line 24 * * figures 1-3,8,10-13,23 * | 2-16 | |
| Y | TSG-N3: "LS ON RAB REQUIREMENTS FOR CS DATA" TSGR3#8(99)E39; TSG-RAN WORKING GROUP 3 MEETING #8, 'Online! 25 December 1999 (1999-12-25) - 29 October 1999 (1999-10-29), pages 1-4, XP002189087 Abiko, Japan Retrieved from the Internet: <URL:http://www.3gpp.org/ftp/tsg_ran/WG3_Iu/TSGR3_08/Docs/Pdfs/R3-99e39.PDF> 'retrieved on 2002-02-01! * the whole document * | 18-20 | |

**TECHNICAL FIELDS SEARCHED (Int.Cl.7)**

H04Q

-/--

The present search report has been drawn up for all claims

| Place of search | Date of completion of the search | Examiner |
|---|---|---|
| MUNICH | 5 February 2002 | Rüschmann, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 01 44 0301

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | "UNIVERSAL MOBILE TELECOMMUNICATIONS SYSTEM (UMTS); Mandatory speech codec; AMR speech codec; Interface to Iu and Uu (3GPP TS 26.102 VERSION 4.0.0 RELEASE 4)" ETSI TS 126 102 V4.0.0, March 2001 (2001-03), pages 1-15, XP002189088 * paragraphs '0004!,'6.1.2! * | 18 | |
| A | "Digital cellular telecommunications system (Phase 2+) (GSM);UNIVERSAL MOBILE TELECOMMUNICATIONS SYSTEM (UMTS); Circuit Switched Data Bearer Service (3GPP TR 23.910 version 4.2.0 Release 4)" ETSI TR 123 910 V4.2.0, March 2001 (2001-03), pages 1-19, XP002189089 * paragraphs '0005!,'0006!,'0008! * | 19,20 | |

**TECHNICAL FIELDS SEARCHED (Int.Cl.7)**

The present search report has been drawn up for all claims

| Place of search | Date of completion of the search | Examiner |
|---|---|---|
| MUNICH | 5 February 2002 | Rüschmann, F |

CATEGORY OF CITED DOCUMENTS

X : particularly relevant if taken alone
Y : particularly relevant if combined with another document of the same category
A : technological background
O : non–written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 44 0301

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2002

| Patent document cited in search report | Publication date | Patent family member(s) | | Publication date |
|---|---|---|---|---|
| WO 0115473 A | 01-03-2001 | AU | 6744200 A | 19-03-2001 |
| | | WO | 0115473 A1 | 01-03-2001 |

For more details about this annex : see Official Journal of the European Patent Office, No. 12/82